(19) **Europäisches Patentamt**
**European Patent Office**
**Office européen des brevets**

(11) **EP 3 804 934 A1**

(12) **EUROPÄISCHE PATENTANMELDUNG**

(43) Veröffentlichungstag:
**14.04.2021 Patentblatt 2021/15**

(51) Int Cl.:
*B29B 7/48* (2006.01)    *B29B 7/84* (2006.01)
*B29C 48/40* (2019.01)   *B29C 48/52* (2019.01)
*B29B 7/74* (2006.01)    *B29B 7/88* (2006.01)
*B29B 7/90* (2006.01)    *B29B 7/94* (2006.01)

(21) Anmeldenummer: 19202448.7

(22) Anmeldetag: **10.10.2019**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **EXTRUDER MIT SCHNECKENELEMENTEN MIT BESONDERS GROSSER STEIGUNG IM BEREICH DER ENTGASUNGSÖFFNUNG**

(57) Mehrwelliger Extruder mit gleichsinnig und gleichschnell drehenden Schneckenwellen, der mindestens eine Entgasungsöffnung aufweist und der im Eintrittsbereich dieser mindestens einen Entgasungsöffnung Schneckenelemente mit besonders großer Steigung aufweist oder Schneckenelemente aufweist, die ein asymmetrisches Schneckenprofil aufweisen oder die exzentrisch auf der Drehachse der Schneckenwelle aufgezogen sind. Weiters beansprucht ist die Verwendung des erfindungsgemäßen Extruders zur Verarbeitung oder Herstellung von plastischen Massen sowie die Verwendung der Schneckenelemente mit besonders großer Steigung oder die Verwendung von Schneckenelementen, die ein asymmetrisches Schneckenprofil aufweisen oder die exzentrisch auf der Drehachse der Schneckenwelle aufgezogen sind, im Bereich der Entgasungsöffnung eines mehrwelligen Extruders.

Fig. 3

EP 3 804 934 A1

**Beschreibung**

Gegenstand der vorliegenden Erfindung ist ein mehrwelliger Extruder mit gleichsinnig und gleichschnell drehenden Schneckenwellen, der mindestens eine Entgasungsöffnung aufweist, und der im Eintrittsbereich dieser mindestens einen Entgasungsöffnung Schneckenelemente mit besonders großer Steigung aufweist oder Schneckenelemente aufweist, die ein asymmetrisches Schneckenprofil aufweisen oder die exzentrisch auf der Drehachse der Schneckenwelle aufgezogen sind. Gegenstand der vorliegenden Erfindung ist auch die Verwendung des erfindungsgemäßen Extruders zur Verarbeitung oder Herstellung von plastischen Massen. Gegenstand der vorliegenden Erfindung ist außerdem die Verwendung der Schneckenelemente mit besonders großer Steigung oder die Verwendung von Schneckenelementen, die ein asymmetrisches Schneckenprofil aufweisen oder die exzentrisch auf der Drehachse der Schneckenwelle aufgezogen sind, im Bereich der Entgasungsöffnung eines mehrwelligen Extruders.

Ein Schneckenelement mit besonders großer Steigung zeichnet sich dadurch aus, dass es ein Verhältnis X von Steigung T des Schneckenelements zum Gehäuseinnendurchmesser Di des Extruders hat, das von 1,75 bis 15 beträgt. Ein asymmetrisches Schneckenelement zeichnet sich dadurch aus, dass es gibt keine Spiegelachse durch einen beliebigen Punkt in der Ebene des Schneckenprofils gibt, mit der ein zum Ausgangsprofil deckungsgleiches Profil erzeugt werden kann; bevorzugt gibt es keine Spiegelachse durch einen beliebigen Punkt innerhalb des Schneckenprofils, besonders bevorzugt keine Spiegelachse durch den Flächenschwerpunkt des Schneckenprofils, mit der ein zum Ausgangsprofil deckungsgleiches Profil erzeugt werden kann. Ein exzentrisch auf der Drehachse der Schneckenwelle aufgezogenes Schneckenelement zeichnet sich dadurch aus, dass der Drehpunkt des Schneckenprofils außerhalb des Flächenschwerpunkts des Schneckenprofils liegt. Ein exzentrisch auf der Drehachse der Schneckenwelle aufgezogenes Schneckenelement kann ein symmetrisches oder ein asymmetrisches Schneckenprofil aufweisen.

Im Sinn der vorliegenden Erfindung wird unter dem Begriff "Schneckenquerschnittsprofil", kurz auch oder "Schneckenprofil" genannt, die äußere Kontur eines Schneckenelements im Querschnitt rechtwinklig zur Drehachse des Schneckenelements verstanden.

In der vorliegenden Schrift werden Schneckenelemente mit besonders großer Steigung, asymmetrische Schneckenelemente und exzentrisch auf der Drehachse der Schneckenwelle aufgezogene Schneckenelemente zusammenfassend auch "Sonderschneckenelemente", in der Einzahl "Sonderschneckenelement" genannt.

Extruder, insbesondere Mehrwellenextruder, werden unter anderem zur Entgasung von plastischen Massen, insbesondere zur Entgasung von Kunststoffen, wiederum insbesondere zur Entgasung von Schmelzen oder Lösungen von thermoplastischen Polymeren oder Schmelzen oder Lösungen von Kautschuken, eingesetzt.

Entgasungsextruder sind aus der Fachliteratur hinlänglich bekannt, beispielsweise aus [1] ([1] = Klemens Kohlgrüber: Der gleichläufige Doppelschneckenextruder, Hanser Verlag München 2007, S. 72-73 und 191-212).

Um flüchtige Bestandteile wie beispielsweise Lösungsmittel oder auch Monomere, die bei der Herstellung eines Polymers nicht zu diesem umgesetzt wurden, zu entfernen, besitzen Extruder in der Regel im Gehäuse Entgasungsöffnungen. Dort können die flüchtigen Bestandteile aus dem Polymer in die Gasphase übergehen und entfernt werden. Im Bereich einer Entgasungsöffnung eines Mehrwellenextruders kann es jedoch zu Ablagerungen des Polymers kommen, wenn das Polymer an der äußeren Kante der Entgasungsöffnung, die parallel zur abwärtsdrehenden Schneckenflanke verläuft, nicht vollständig wieder eingezogen wird. Der Polymerwulst, der sich dann bildet, wird langsamer ausgetauscht als die übrige Polymermasse im gleichen Querschnitt des Mehrwellenextruders. Dies kann zu einer breiteren Verweilzeitverteilung des Polymers im Mehrwellenextruder und dadurch dazu führen, dass die gewünschten Eigenschaften des Polymers nicht oder nur unvollständig erreicht werden. Außerdem kann der maximal mögliche Durchsatz des Mehrwellenextruders durch den Wiedereinzug der Polymermasse im Bereich der Entgasungsöffnung verringert werden, wenn die Entgasungsöffnung bei hohen Durchsätzen durch unzureichenden Wiedereinzug vollläuft und der Durchsatz reduziert werden muss, um einen ausreichenden Wiedereinzug zu gewährleisten.

Aufgabe der vorliegenden Erfindung ist es, die genannten Nachteile des Stands der Technik zu überwinden.

Insbesondere Aufgabe der vorliegenden Erfindung ist es, einen Extruder zur Verfügung zu stellen, der die genannten Nachteile des Stands der Technik überwindet.

Überraschenderweise wird die Aufgabe durch einen Extruder mit den Merkmalen des Hauptanspruchs gelöst.

Gegenstand der Erfindung ist daher gemäß einer ersten Ausführungsform
ein Extruder mit zwei oder mehr gleichsinnig und gleichschnell drehenden Schneckenwellen, wobei der Extruder mindestens eine Entgasungsöffnung aufweist,
wobei im Eintrittsbereich dieser mindestens einen Entgasungsöffnung jede Schneckenwelle mindestens je ein Großsteigungsschneckenelement aufweist, das ein Verhältnis X von Steigung T zu Gehäuseinnendurchmesser Di von 1,75 bis 15 aufweist,
oder
mindestens je ein asymmetrisches Schneckenelement aufweist,
oder

mindestens je ein exzentrisch auf der Drehachse der Schneckenwelle aufgezogenes Schneckenelement aufweist,

wobei diese mindestens je einen Großsteigungsschneckenelemente

oder

diese mindestens je einen asymmetrischen Schneckenelemente,

oder

diese mindestens je einen exzentrisch auf der Drehachse der Schneckenwelle aufgezogenen Schneckenelemente,

auf unmittelbar benachbarten Schneckenwellen unmittelbar benachbart gegenüberliegen,

wobei der Eintrittsbereich der mindestens einen Entgasungsöffnung ein Abschnitt des Extruders ist, der bezogen auf die in Förderrichtung zuerst liegende Kante der Entgasungsöffnung

(a) 100 % der Länge der Entgasungsöffnung in Förderrichtung und erstreckt entgegen der Förderrichtung, und
(b) 50 % der Länge der Entgasungsöffnung in Förderrichtung und erstreckt in Förderrichtung, überstreicht,

und

ab der in Förderrichtung des Extruders zuerst liegenden Kante der Entgasungsöffnung sich das mindestens je eine Großsteigungsschneckenelement

oder

das mindestens je eine asymmetrische Schneckenelement,

oder

das mindestens je eine exzentrisch auf der Drehachse der Schneckenwelle aufgezogene Schneckenelement,
0 bis 50 % der Länge der Entgasungsöffnung in die Entgasungsöffnung hinein erstreckt,

und

das mindestens je eine Großsteigungsschneckenelement

oder

das mindestens je eine asymmetrische Schneckenelement,

oder

das mindestens je eine exzentrisch auf der Drehachse der Schneckenwelle aufgezogene Schneckenelement,
in Förderrichtung vor der in Förderrichtung zuerst liegenden Kante der Entgasungsöffnung beginnt und sich mindestens bis an die in Förderrichtung zuerst liegende Kante der Entgasungsöffnung erstreckt,

wobei auf dieses mindestens je einen Großsteigungsschneckenelements oder dieses mindestens je eine asymmetrische Element oder auf dieses mindestens je eine exzentrisch auf der Drehachse der

Schneckenwelle aufgezogenen Schneckenelements unmittelbar in Förderrichtung mindestens je ein Geringsteigungsschneckenelement folgt, das je ein Verhältnis X von Steigung T zu Gehäuseinnendurchmesser Di von kleiner als 1,5 aufweist.

Im Sinne der vorliegenden Erfindung ist ein Schneckenelement mit einer besonders großen Steigung, auch Großsteigungsschneckenelement genannt, ein Schneckenelement, dass ein Verhältnis X von Steigung T des Schneckenelement zu Gehäuseinnendurchmesser Di des Extruders von 1,75 bis 15 aufweist, also:

$$1{,}75 \leq X = T/D \leq 15.$$

Bevorzugt gilt für das Großsteigungsschneckenelement

$$2 \leq X = T/D \leq 10,$$

und besonders bevorzugt

$$2{,}5 \leq X = T/D \leq 5.$$

Dabei ist die Steigung T eines Schneckenelements die axiale Länge, die für eine vollständige Drehung des Schneckenprofils des Schneckenelements erforderlich ist. Der Gehäuseinnendurchmesser Di ist der Innendurchmesser des Querschnitts der Gehäusebohrung, in der sich die jeweilige Schneckenwelle befindet, auf der das betreffende Schneckenelement aufgezogen ist. Ein Mehrwellenextruder weist dabei einer der Anzahl der Wellen entsprechende Anzahl von einander durchdringenden, also einen Zwickel bildenden, kreisförmige Gehäusebohrungen auf, die jeweils einen identischen Gehäuseinnendurchmesser Di haben.

Ein Geringsteigungsschneckenelement im Sinne der vorliegenden Erfindung ist dabei ein Schneckenelement, dass ein Verhältnis X von Steigung T des Schneckenelement zu Gehäuseinnendurchmesser Di des Extruders von kleiner 1,5 aufweist, bevorzugt von 1,2 und weniger aufweist.

In der vorliegenden Schrift wird ein Schneckenelement, das weder ein Großsteigungsschneckenelement, noch ein asymmetrisches Schneckenelement, noch ein Schneckenelement ist, das exzentrisch auf der Drehachse der Schneckenwelle aufgezogen ist, auch als "Nicht-Sonderschneckenelement" bezeichnet.

Der Begriff "Eintrittsbereich dieser mindestens einen Entgasungsöffnung", wie er oben definiert ist, ist nicht gleich dem Begriff "Bereich einer Entgasungsöffnung" gleichzusetzen. Der Begriff "Bereich einer Entgasungsöffnung" bedeutet dabei das Volumen innerhalb des Extruders einschließlich des inneren Volumens der Entgasungsöffnung, der in Förderrichtung mit der vorderen inneren Kante der Entgasungsöffnung beginnt und mit der hinteren inneren Kante der Entgasungsöffnung endet.

Nach einer zweiten Ausführungsform betrifft die Erfindung einen Extruder nach Ausführungsform 1, wobei das je eine Großsteigungsschneckenelement gleichzeitig ein asymmetrisches oder ein exzentrisch auf der Drehachse der Schneckenwelle aufgezogenes Schneckenelement ist.

Bevorzugt zeichnen sich die im erfindungsgemäßen Extruder eingesetzten Sonderschneckenelemente also dadurch aus, dass sie sowohl die Merkmale eines Großsteigungsschneckenelements als auch die Merkmale eines asymmetrischen oder die Merkmale eines exzentrisch auf der Drehachse der Schneckenwelle aufgezogenen Schneckenelements aufweisen.

Nach einer dritten Ausführungsform betrifft die Erfindung einen Extruder nach Ausführungsform 1 oder Ausführungsform 2, wobei das je eine Großsteigungsschneckenelement sowohl gleichzeitig ein asymmetrisches als auch ein exzentrisch auf der Drehachse der Schneckenwelle aufgezogenes Schneckenelement ist.

Besonders bevorzugt zeichnen sich die im erfindungsgemäßen Extruder eingesetzten Sonderschneckenelemente also dadurch aus, dass sie sowohl die Merkmale eines Großsteigungsschneckenelements als auch die Merkmale eines asymmetrischen als auch die Merkmale eines exzentrisch auf der Drehachse der Schneckenwelle aufgezogenen Schneckenelements aufweisen.

Nach einer vierten Ausführungsform betrifft die Erfindung einen Extruder nach einer der Ausführungsformen 1 bis 3, wobei sich das mindestens je eine Sonderschneckenelement ab der in Förderrichtung des Extruders zuerst liegenden Kante der Entgasungsöffnung höchstens 20 %, bevorzugt höchstens 10 % der Länge der Entgasungsöffnung in die Entgasungsöffnung hinein erstreckt.

Nach einer fünften Ausführungsform betrifft die Erfindung einen Extruder nach einer der Ausführungsformen 1 bis 4, wobei sich das mindestens je eine Sonderschneckenelement ab der in Förderrichtung des Extruders zuerst liegenden Kante der Entgasungsöffnung mindestens 10 % bis maximal 100 %, bevorzugt mindestens 20 % bis maximal 50 % der Länge des Entgasungsöffnung gegen die Förderrichtung erstreckt.

Nach einer sechsten Ausführungsform betrifft die Erfindung einen Extruder nach einer der Ausführungsformen 1 bis 5, wobei in dem Abschnitt des Extruders, in dem sich die mindestens eine Entgasungsöffnung befindet, keine weiteren Sonderschneckenelemente mehr vorliegen.

In anderen Worten, unabhängig davon, ob das Sonderschneckenelement ein Großsteigungsschneckenelement ist oder ein asymmetrisches Schneckenelement ist oder ein Schneckenelement ist, das exzentrisch auf der Drehachse der Schneckenwelle aufgezogen ist, es folgt danach in dem Abschnitt des Extruders, in dem sich die mindestens eine Entgasungsöffnung befindet, weder ein Großsteigungsschneckenelement, noch ein asymmetrisches Schneckenelement, noch eine Schneckenelement, das exzentrisch auf der Drehachse der Schneckenwelle aufgezogen ist.

Bevorzugt weist im Eintrittsbereich der mindestens einen Entgasungsöffnung jede Schneckenwelle genau ein Sonderschneckenelement auf.

Nach einer siebten Ausführungsform betrifft die Erfindung einen Extruder nach einer der Ausführungsformen 1 bis 6, wobei ein Sonderschneckenelement eine axiale Länge aufweist, die 0,1 bis 3, bevorzugt 0,5 bis 1 des Gehäuseinnendurchmessers Di beträgt.

Dabei gilt erfindungsgemäß, dass wenn zwei oder mehr Sonderschneckenelemente eine axiale Länge aufweisen, die geringer als 0,5 des Gehäuseinnendurchmessers Di ist, und sind diese zwei oder mehr solcher Sonderschneckenelemente axial unmittelbar hintereinander angeordnet, so werden diese als ein Sonderschneckenelement angesehen, soweit die Summe der axialen Längen dieser Sonderschneckenelemente vermindert um die axiale Länge des in Förderrichtung letzten Sonderschneckenelements 3 des Gehäuseinnendurchmessers Di nicht übersteigt.

Dabei gilt erfindungsgemäß bevorzugt, dass wenn zwei oder mehr Sonderschneckenelemente eine axiale Länge aufweisen, die geringer als 0,1 des Gehäuseinnendurchmessers Di ist, und sind diese zwei oder mehr solcher Sonderschneckenelemente axial unmittelbar hintereinander angeordnet, so werden diese als ein Sonderschneckenelement angesehen, soweit die Summe der axialen Längen dieser Sonderschneckenelemente vermindert um die axiale Länge des in Förderrichtung letzten Sonderschneckenelements 1 des Gehäuseinnendurchmessers Di nicht übersteigt.

Sowohl für den erfindungsgemäßen als auch für den erfindungsgemäß bevorzugten Fall gilt dabei, dass Distanzscheiben, die zwischen zwei oder mehr solcher axial unmittelbar hintereinander angeordneten Sonderschneckenelementen angeordnet sind, nicht mit betrachtet werden, das heißt, befindet oder befinden sich zwischen zwei axial hintereinander angeordneten Sonderschneckenelementen ein oder mehrere Distanzscheiben, so werden diese zwei Sonderschneckenelemente als unmittelbar hintereinander angeordnete Sonderschneckenelemente betrachtet.

Nach einer achten Ausführungsform betrifft die Erfindung einen Extruder nach einer der Ausführungsformen 1 bis 7, wobei ein Nicht-Sonderschneckenelement eine axiale Länge aufweist, die 0,1 bis 3, bevorzugt 0,5 bis 1,5 des Gehäuseinnendurchmessers Di beträgt.

Nach einer neunten Ausführungsform betrifft die Erfindung einen Extruder nach einer der Ausführungsformen 1 bis 8, wobei das mindestens je eine Sonderschneckenelement ein Förderelement ist. Nach einer zehnten Ausführungsform betrifft die Erfindung einen Extruder nach einer der Ausführungsformen 1 bis 9, wobei das mindestens je eine Nicht-Sonderschneckenelement ein Förderelement ist.

Nach einer elften Ausführungsform betrifft die Erfindung einen Extruder nach einer der Ausführungsformen 1 bis 10, wobei das mindestens je eine Sonderschneckenelement ein eingängiges Schneckenelement, ein zweigängiges Schneckenelement, ein dreigängiges Schneckenelement oder ein viergängiges Schneckenelement, bevorzugt ein zweigängiges Schneckenelement ist.

Nach einer zwölften Ausführungsform betrifft die Erfindung einen Extruder nach einer der Ausführungsformen 1 bis 12, wobei das mindestens je eine Nicht-Sonderschneckenelement ein eingängiges Schneckenelement, ein zweigängiges Schneckenelement, ein dreigängiges Schneckenelement oder ein viergängiges Schneckenelement ist, bevorzugt ist es ein zweigängiges Schneckenelement.

Nach einer dreizehnten Ausführungsform betrifft die Erfindung einen Extruder nach einer der Ausführungsformen 1 bis 12, wobei die Länge der Entgasungsöffnung in Förderrichtung von 50 bis 750 % des Gehäuseinnendurchmessers Di des Extruders beträgt.

Nach einer vierzehnten Ausführungsform betrifft die Erfindung einen Extruder nach einer der Ausführungsformen 1 bis 14, wobei die Querschnittsfläche der Entgasungsöffnung von 50 bis 1400 % des Quadrats des Gehäuseinnendurchmessers Di des Extruders beträgt.

Mit dem erfindungsgemäßen Extruder wird vermieden, dass Polymer an der äußeren Kante der Entgasungsöffnung, die parallel zur abwärtsdrehenden Schneckenflanke verläuft, nicht vollständig wieder eingezogen wird und es so zu Ablagerungen des Polymers kommt.

Dadurch wird auch die Gefahr einer breitere Verweilzeitverteilung des Polymers im Mehrwellenextruder verringert, sodass die gewünschten Eigenschaften des Polymers leichter erreicht werden können. Außerdem wird beim erfindungsgemäßen Extruder der Durchsatz des Mehrwellenextruders im Bereich der Entgasungsöffnung befördert, wodurch auch der Gesamtdurchsatz des Mehrwellenextruders befördert wird und damit wiederum auch das Verhältnis von Gesamtdurchsatz des Mehrwellenextruder zu verbrauchter Antriebsenergie für die Schneckenwellen erhöht wird.

Gegenstand der vorliegenden Erfindung ist auch die Verwendung des erfindungsgemäßen Extruders zur Herstellung und Verarbeitung, insbesondere Entgasung, von plastischen Massen, insbesondere zur Herstellung und Verarbeitung von Schmelzen oder Lösungen von thermoplastischen Polymeren oder Schmelzen oder Lösungen von Kautschuken.

Auch durch diesen weiteren Gegenstand der vorliegenden Erfindung wird die eingangs gestellte Aufgabe gelöst.

Im Sinne der vorliegenden Erfindung wird unter einer mehrwelligen Extruder ein Extruder mit mehr als einer Schneckenwelle verstanden, beispielsweise ein Extruder mit zwei, drei oder vier Schneckenwellen oder auch ein Extruder mit acht bis sechzehn, insbesondere zwölf, ringförmig angeordneten Schneckenwellen. Bei mehr als zwei Schneckenwellen können die Drehachsen der Schneckenwellen nebeneinander, in einem Vieleck mit einer Anzahl Ecken gleich der Anzahl der Wellen, oder beispielsweise auch - wie bei einem sogenannten Ringextruder - ringförmig zueinander angeordnet sein. Bei Mehrwellenextrudern sind die Drehachsen der Schneckenwellen in aller Regel parallel zueinander angeordnet, sie können aber auch nichtparallel angeordnet sein. Ein solcher Extruder mit mehr als einer Schneckenwelle wird nachfolgend auch mehrwellige Schneckenmaschine, Mehrwellenschneckenmaschine oder Mehrwellenextruder genannt. Eine zweiwellige Schneckenmaschine wird nachfolgend auch Doppelschneckenextruder genannt. Im Sinne der vorliegenden Erfindung wird der Begriff "Extruder" gleichbedeutend mit dem Begriff "Schneckenmaschine" gebraucht. Bevorzugt handelt es sich bei dem erfindungsgemäßen Mehrwellenextruder um einen Extruder mit gleichschnell und gleichsinnig drehenden Schneckenwellen. Besonders bevorzugt handelt es sich bei dem erfindungsgemäßen Mehrwellenextruder um einen Doppelschneckenextruder mit gleichschnell und gleichsinnig drehenden Schneckenwellen oder um einen Mehrwellenextruder mit mehreren - insbesondere acht oder zwölf - ringförmig zueinander angeordneten, gleichschnell und gleichsinnig drehenden Schneckenwellen, ganz besonders bevorzugt handelt es sich bei dem erfindungsgemäßen Mehrwellenextruder um einen Doppelschneckenextruder mit gleichschnell und gleichsinnig drehenden Schneckenwellen, insbesondere sind diese Schneckenwellen parallel zueinander angeordnet.

Üblicherweise werden Schneckenwellen für mehrwellige Mehrwellenextruder nach dem Stand der Technik modular aus Schneckenelementen aufgebaut, die auf eine Kernwelle aufgezogen werden. Beim erfindungsgemäßen Extruder sind im Bereich der mindestens einen Entgasungsöffnung die Schneckenelemente mit einer besonders großen Steigung in einer Anzahl, die der Anzahl der Schneckenwellen des jeweiligen Extruders entspricht, auf den Schneckenwellen gegenüberliegend angeordnet. Die Sonderschneckenelemente können dabei gleiche oder unterschiedliche Schneckenprofile aufweisen.

Die Sonderschneckenelemente können in dem erfindungsgemäßen Extruder in Form von Knet-, Förder- oder Mischelementen vorliegen, bevorzugt sind die Sonderschneckenelemente Förderelemente.

Im Falle von Knetelementen ist die Steigung T die Summe der axialen Längen von unmittelbar hintereinander gereihten Knetscheiben, die für eine vollständige Drehung des Knetscheibenprofils erforderlich ist.

Im Sinn der vorliegenden Erfindung wir unter dem Begriff "Knetscheibenprofil", auch "Knetscheibenquerschnittsprofil" genannt, die äußere Kontur einer Knetscheibe im Querschnitt rechtwinklig zur Drehachse der Knetscheibe verstanden.

Ein Förderelement zeichnet sich bekanntlich dadurch aus (siehe zum Beispiel [1], Seiten 227 - 248), dass ein Schneckenprofil in Achsrichtung kontinuierlich schraubenförmig verdreht und fortgesetzt wird. Dabei kann das Förderelement rechts- oder linksgängig sein.

Ein Knetelement zeichnet sich bekanntlich dadurch aus (siehe zum Beispiel [1], Seiten 227 - 248), dass ein Schneckenprofil in Achsrichtung absatzweise in Form von Knetscheiben fortgeführt wird. Die Anordnung der Knetscheiben kann rechts- oder linksgängig oder neutral erfolgen.

Mischelemente werden bekanntlich dadurch gebildet (siehe zum Beispiel [1], Seiten 227 - 248), dass Förderelemente mit Durchbrüchen in den Schneckenkämmen ausgeführt werden. Die Mischelemente können rechts- oder linksgängig sein. Die Durchbrüche haben bevorzugt die Form einer u- oder v-förmigen Nut, die bevorzugt gegenfördernd oder achsparallel angeordnet sind.

Ein Sonderschneckenelement kann auch als Übergangselement ausgestaltete sein, das heißt, dass das Schneckenprofil an einer Stelle der axialen Ausdehnung des Schneckenelement ein anderes ist als an einer anderen Stelle der axialen Ausdehnung des Schneckenelements, wobei sich diese verschiedenen Profile nicht durch Drehung ineinander überführen lassen.

Sonderschneckenelemente, die auf sich auf benachbarten Schneckenwellen gegenüberliegen, reinigen sich - unter Berücksichtigung der technisch notwendigen Spiele - bevorzugt gegenseitig ab. Es können aber auch auf benachbarten Schneckenwellen gegenüberliegende Sonderschneckenelemente verwendet werden, die sich nicht exakt abreinigen.

Im Sinne der vorliegenden Erfindung werden unter plastischen Massen insbesondere verstanden: Suspensionen, Pasten, Glasschmelzen, ungebrannte Keramiken, Metallschmelzen, oder Kunststoffe.

Im Sinne der vorliegenden Erfindung werden unter Kunststoffen insbesondere verstanden: Polymere, insbesondere Polymerschmelzen oder Polymerlösungen, wiederum insbesondere Schmelzen oder Lösungen von thermoplastischen Polymeren oder Schmelzen oder Lösungen von Kautschuken.

Als thermoplastisches Polymer wird bevorzugt wenigstens eines aus der Reihe Polycarbonat, Polyamid, Polyester, insbesondere Polybutylenterephthalat und Polyethylenterephthalat, Polylactide, Polyether, thermoplastisches Polyurethan, Polyacetal, Fluorpolymer, insbesondere Polyvinylidenfluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, Acrylnitrilbutadienstyrolblockcopolymere und Polyvinylchlorid eingesetzt. Ebenso bevorzugt eingesetzt werden so genannte Blends aus den aufgeführten Polymeren, worunter der Fachmann eine Kombination aus zwei oder mehreren Polymeren versteht. Besonders bevorzugt sind Polycarbonat und Mischungen enthaltend Polycarbonat, ganz besonders bevorzugt Polycarbonat, beispielsweise erhalten nach dem Phasengrenzflächenverfahren oder dem Schmelzeumesterungsverfahren.

Als Kautschuk wird bevorzugt wenigstens einer aus der Reihe Styrol-Butadien-Kautschuk, Naturkautschuk, Butatiden-Kautschuk, Isopren-Kautschuk, Ethylen-Propylen-Dien-Kautschuk, Ethylen-Propylen-Kautschuk, Butadien-Acrylnitril-Kautschuk, hydrierter Nitrilkautschuk, Butylkautschuk, Halobutylkautschuk, Chloropren-Kautschuk, Ethylen-Vinylacetat-Kautschuk, Polyurethan-Kautschuk, Thermoplastisches Polyurethan, Guttapercha, Arylatkautschuk, Fluorkautschuk, Siliconkautschuk, Sulfidkautschuk, Chlorsulfonyl-Polyäthylen-Kautschuk eingesetzt. Eine Kombination von zwei oder mehreren der aufgeführten Kautschuke, oder eine Kombination aus einem oder mehreren Kautschuk mit einem oder mehreren anderen Kunststoffen ist natürlich auch möglich.

Diese Thermoplaste oder Kautschuke können in reiner Form oder als Mischungen mit Füll- und Verstärkungsstoffen, wie insbesondere Glasfasern, als Mischungen untereinander oder mit anderen Polymeren oder als Mischungen mit üblichen Polymeradditiven eingesetzt werden.

In einer bevorzugten Ausführungsform werden den plastischen Massen, insbesondere den Polymerschmelzen und Mischungen von Polymerschmelzen, Additive beigemengt. Diese können als Feststoffe, Flüssigkeiten oder Lösungen gemeinsam mit dem Polymer in den Extruder gegeben werden oder aber es wird wenigstens ein Teil der Additive oder alle Additive dem Extruder über einen Seitenstrom zugeführt.

Additive können einem Polymer vielfältige Eigenschaften verleihen. Dies können beispielsweise Farbmittel, Pigmente, Verarbeitungshilfsmittel, Füllstoffe, Antioxidantien, Verstärkungsstoffe, UV-Absorber und Lichtstabilisatoren, Metalldesaktivatoren, Peroxidfänger, basische Stabilisatoren, Keimbildner, als Stabilisatoren oder Antioxidatien wirksame Benzofurane und Indolinone, Formtrennmittel, flammhemmende Additive, antistatische Mittel, Färbemittel und Schmelzestabilisatoren. Beispielhaft für diese sind Ruß, Glasfaser, Ton, Glimmer, Graphitfaser, Titandioxid, Kohlenstofffasern, Kohlenstoffnanoröhrchen, ionische Flüssigkeiten und Naturfasern.

Die Erfindung wird nachstehend anhand der Figuren beispielhaft näher erläutert, ohne sie jedoch auf diese zu beschränken.

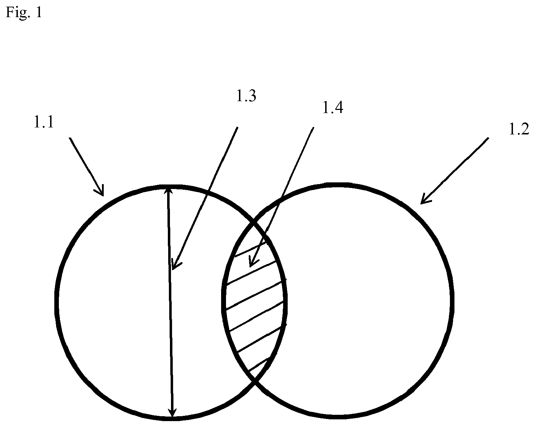

Figur 1 zeigt einen Querschnitt der beiden Gehäusebohrungen eines Doppelschneckenextruders, wobei die beiden Gehäusebohrungen den gleichen Gehäuseinnendurchmesser Di, einander durchdringen und dabei einen Zwickel bilden. Der Gehäuseinnendurchmesser Di einer der Gehäusebohrungen ist eingezeichnet. Der Querschnitt der ersten Gehäusebohrung ist dabei mit 1.1 bezeichnet, der Querschnitt der zweiten Gehäusebohrung ist mit 1.2 bezeichnet, der Innendurchmesser Di der ersten Gehäusebohrung ist mit 1.3 bezeichnet und der Zwickel ist mit 1.4 bezeichnet.

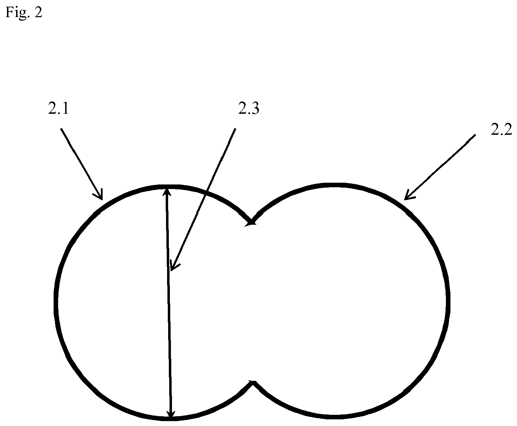

Figur 2 zeigt den Querschnitt aus Figur 1 ohne eingezeichneten Zwickel. Auch hier ist der Gehäuseinnendurchmesser Di einer der Gehäusebohrungen eingezeichnet. Der Gehäuseinnendurchmesser Di einer der Gehäusebohrungen ist eingezeichnet. Der Querschnitt der ersten Gehäusebohrung ist dabei mit 2.1 bezeichnet, der Querschnitt der zweiten Gehäusebohrung ist mit 2.2 bezeichnet und der Innendurchmesser Di der ersten Gehäusebohrung ist mit 3.3 bezeichnet

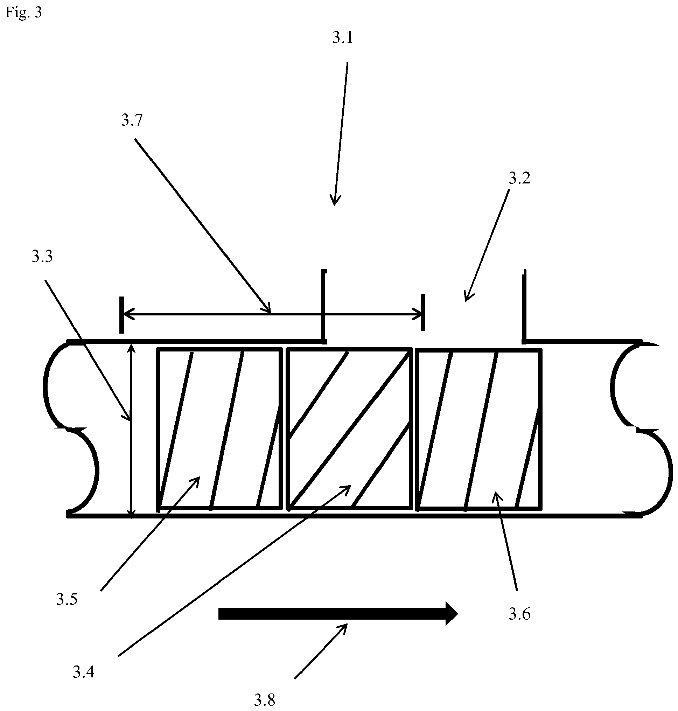

Figur 3 zeigt einen Längsschnitt durch einen Abschnitt eines erfindungsgemäßen Entgasungsextruders, wobei dieser Abschnitt sowohl eine Entgasungsöffnung als auch ein Großsteigungsschneckenelement zeigt. Der Abschnitt des erfindungsgemäßen Entgasungsextruders ist dabei mit 3.1 bezeichnet, die Entgasungsöffnung ist mit 3.2 bezeichnet, der Gehäuseinnendurchmesser ist mit 3.3 bezeichnet, das Großsteigungsschneckenelement ist mit 3.4 bezeichnet, das in Förderrichtung vor dem Großsteigungsschneckenelement liegende Geringsteigungsschneckenelement ist mit 3.5 bezeichnet, das in Förderrichtung hinter dem Großsteigungsschneckenelement liegende Geringsteigungsschneckenelement ist mit 3.6 bezeichnet, die Länge des Eintrittsbereich der Entgasungsöffnung ist mit 3.7 bezeichnet und die Förderrichtung ist mit 3.8 bezeichnet.

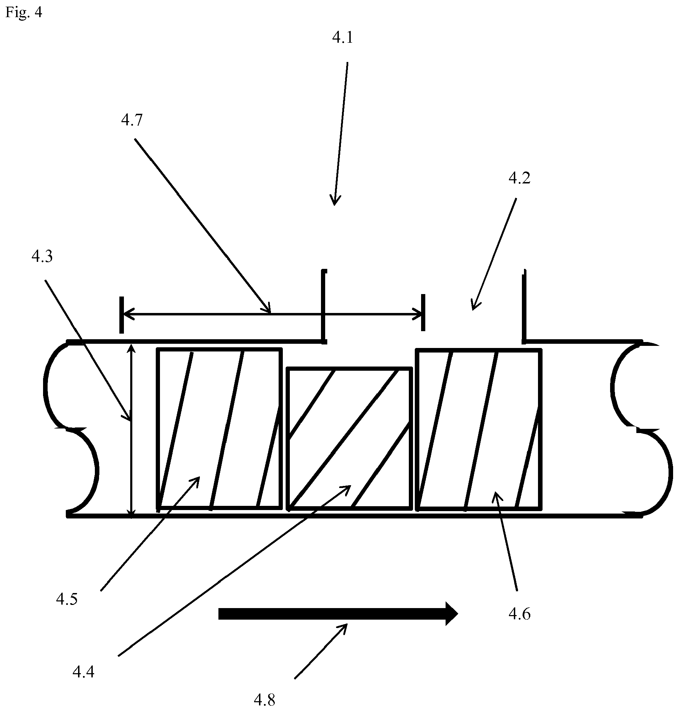

Figur 4 zeigt einen Längsschnitt durch einen Abschnitt eines erfindungsgemäßen Entgasungsextruders, wobei dieser Abschnitt sowohl eine Entgasungsöffnung als auch ein asymmetrisches Schneckenelement zeigt. Der Abschnitt des erfindungsgemäßen Entgasungsextruders ist dabei mit 4.1 bezeichnet, die Entgasungsöffnung ist mit 4.2 bezeichnet, der Gehäuseinnendurchmesser ist mit 4.3 bezeichnet, das asymmetrische Schneckenelement ist mit 4.4 bezeichnet, das in Förderrichtung vor dem asymmetrischen Schneckenelement liegende nicht-asymmetrische Schneckenelement ist mit 4.5 bezeichnet, das in Förderrichtung hinter dem asymmetrischen Schneckenelement liegende nicht-asymmetrische Schneckenelement ist mit 4.6 bezeichnet, die Länge des Eintrittsbereich der Entgasungsöffnung ist mit 4.7 bezeichnet und die Förderrichtung ist mit 4.8 bezeichnet. Das asymmetrischen Schneckenelement ist gleichzeitig ein Schneckenelement, das exzentrisch auf der Drehachse der Schneckenwelle aufgezogen ist.

## Patentansprüche

1. Extruder mit zwei oder mehr gleichsinnig und gleichschnell drehenden Schneckenwellen,
wobei der Extruder mindestens eine Entgasungsöffnung aufweist,
wobei im Eintrittsbereich dieser mindestens einen Entgasungsöffnung jede Schneckenwelle mindestens je ein Großsteigungsschneckenelement aufweist, das ein Verhältnis X von Steigung T zu Gehäuseinnendurchmesser Di von 1,75 bis 15 aufweist,
oder
mindestens je ein asymmetrisches Schneckenelement aufweist,
oder
mindestens je ein exzentrisch auf der Drehachse der Schneckenwelle aufgezogenes Schneckenelement aufweist,
wobei diese mindestens je einen Großsteigungsschneckenelemente
oder
diese mindestens je einen asymmetrischen Schneckenelemente,
oder
diese mindestens je einen exzentrisch auf der Drehachse der Schneckenwelle aufgezogenen Schneckenelemente,
auf unmittelbar benachbarten Schneckenwellen unmittelbar benachbart gegenüberliegen, wobei der Eintrittsbereich der mindestens einen Entgasungsöffnung ein Abschnitt des Extruders ist, der bezogen auf die in Förderrichtung zuerst liegende Kante der Entgasungsöffnung

   (a) 100 % der Länge der Entgasungsöffnung in Förderrichtung und erstreckt entgegen der Förderrichtung, und
   (b) 50 % der Länge der Entgasungsöffnung in Förderrichtung und erstreckt in Förderrichtung,

überstreicht,
und
ab der in Förderrichtung des Extruders zuerst liegenden Kante der Entgasungsöffnung sich das mindestens je eine Großsteigungsschneckenelement
oder
das mindestens je eine asymmetrische Schneckenelement,
oder
das mindestens je eine exzentrisch auf der Drehachse der Schneckenwelle aufgezogene Schneckenelement,
0 bis 50 % der Länge der Entgasungsöffnung in die Entgasungsöffnung hinein erstreckt,
und
das mindestens je eine Großsteigungsschneckenelement

oder

das mindestens je eine asymmetrische Schneckenelement,

oder

das mindestens je eine exzentrisch auf der Drehachse der Schneckenwelle aufgezogene Schneckenelement,

in Förderrichtung vor der in Förderrichtung zuerst liegenden Kante der Entgasungsöffnung beginnt und sich mindestens bis an die in Förderrichtung zuerst liegende Kante der Entgasungsöffnung erstreckt,

wobei auf dieses mindestens je einen Großsteigungsschneckenelements oder dieses mindestens je eine asymmetrische Element oder auf dieses mindestens je eine exzentrisch auf der Drehachse der Schneckenwelle aufgezogenen Schneckenelements unmittelbar in Förderrichtung mindestens je ein Geringsteigungsschneckenelement folgt, das je ein Verhältnis X von Steigung T zu Gehäuseinnendurchmesser Di von kleiner als 1,5 aufweist.

2. Extruder nach Anspruch 1, wobei das je eine Großsteigungsschneckenelement gleichzeitig ein asymmetrisches oder ein exzentrisch auf der Drehachse der Schneckenwelle aufgezogenes Schneckenelement ist.

3. Extruder nach Anspruch 1 oder Anspruch 2, wobei das je eine Großsteigungsschneckenelement sowohl gleichzeitig ein asymmetrisches als auch ein exzentrisch auf der Drehachse der Schneckenwelle aufgezogenes Schneckenelement ist.

4. Extruder nach einer der Ansprüche 1 bis 3, wobei sich das mindestens je eine Sonderschneckenelement ab der in Förderrichtung des Extruders zuerst liegenden Kante der Entgasungsöffnung höchstens 20 %, bevorzugt höchstens 10 % der Länge der Entgasungsöffnung in die Entgasungsöffnung hinein erstreckt.

5. Extruder nach einer der Ansprüche 1 bis 4, wobei sich das mindestens je eine Sonderschneckenelement ab der in Förderrichtung des Extruders zuerst liegenden Kante der Entgasungsöffnung mindestens 10 % bis maximal 100 %, bevorzugt mindestens 20 % bis maximal 50 % der Länge des Entgasungsöffnung gegen die Förderrichtung erstreckt.

6. Extruder nach einer der Ansprüche 1 bis 5, wobei in dem Abschnitt des Extruders, in dem sich die mindestens eine Entgasungsöffnung befindet, keine weiteren Sonderschneckenelemente mehr vorliegen.

7. Extruder nach einer der Ansprüche 1 bis 6, wobei ein Sonderschneckenelement eine axiale Länge aufweist, die 0,1 bis 3, bevorzugt 0,5 bis 1 des Gehäuseinnendurchmessers Di beträgt.

8. Extruder nach einer der Ansprüche 1 bis 7, wobei ein Nicht-Sonderschneckenelement eine axiale Länge aufweist, die 0,1 bis 3, bevorzugt 0,5 bis 1,5 des Gehäuseinnendurchmessers Di beträgt.

9. Extruder nach einer der Ansprüche 1 bis 8, wobei das mindestens je eine Sonderschneckenelement ein Förderelement ist.

10. Extruder nach einer der Ansprüche 1 bis 9, wobei das mindestens je eine Nicht-Sonderschneckenelement ein Förderelement ist.

11. Extruder nach einer der Ansprüche 1 bis 10, wobei das mindestens je eine Sonderschneckenelement ein eingängiges Schneckenelement, ein zweigängiges Schneckenelement, ein dreigängiges Schneckenelement oder ein viergängiges Schneckenelement, bevorzugt ein zweigängiges Schneckenelement ist.

12. Extruder nach einer der Ansprüche 1 bis 12, wobei das mindestens je eine Nicht-Sonderschneckenelement ein eingängiges Schneckenelement, ein zweigängiges Schneckenelement, ein dreigängiges Schneckenelement oder ein viergängiges Schneckenelement ist, bevorzugt ist es ein zweigängiges Schneckenelement.

13. Extruder nach einer der Ansprüche 1 bis 12, wobei die Länge der Entgasungsöffnung in Förderrichtung von 50 bis 750 % des Gehäuseinnendurchmessers Di des Extruders beträgt.

14. Extruder nach einer der Ansprüche 1 bis 14, wobei die Querschnittsfläche der Entgasungsöffnung von 50 bis 1400 % des Quadrats des Gehäuseinnendurchmessers Di des Extruders beträgt.

15. Verwendung eines Extruders nach einem der Ansprüche 1 bis 14 zur Herstellung und Verarbeitung, insbesondere Entgasung, von plastischen Massen, insbesondere zur Herstellung und Verarbeitung von Schmelzen oder Lösungen von thermoplastischen Polymeren oder Schmelzen oder Lösungen von Kautschuken.

Fig. 1

Fig. 2

2.1   2.3   2.2

Fig. 3

Fig. 4

**EP 3 804 934 A1**

Europäisches Patentamt
European Patent Office
Office européen des brevets

# EUROPÄISCHER RECHERCHENBERICHT

Nummer der Anmeldung

EP 19 20 2448

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2008/036115 A1 (UEDA MINORU [JP] ET AL) 14. Februar 2008 (2008-02-14) <br> * Absätze [0042], [0043] * <br> * Zusammenfassung; Abbildungen 1-4 * <br> ----- | 1-15 | INV. <br> B29B7/48 <br> B29B7/84 <br> B29C48/40 <br> B29C48/52 |
| A | US 6 511 217 B1 (SILVI N [US] ET AL) 28. Januar 2003 (2003-01-28) <br> * Spalte 5, Zeile 12 - Spalte 6, Zeile 17 * <br> * Zusammenfassung; Abbildungen 1,2 * <br> ----- | 1-15 | ADD. <br> B29B7/74 <br> B29B7/88 <br> B29B7/90 <br> B29B7/94 |
| A | US 5 811 511 A (TANIGAWA YUKIO [JP] ET AL) 22. September 1998 (1998-09-22) <br> * Spalte 3, Zeile 46 - Spalte 4, Zeile 47 * <br> * Zusammenfassung; Abbildungen 1,3a-4d * <br> ----- | 1-15 | |

RECHERCHIERTE SACHGEBIETE (IPC)

B29B
B29C

Der vorliegende Recherchenbericht wurde für alle Patentansprüche erstellt

| Recherchenort | Abschlußdatum der Recherche | Prüfer |
|---|---|---|
| München | 2. April 2020 | Brunold, Axel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................
& : Mitglied der gleichen Patentfamilie, übereinstimmendes Dokument

EPO FORM 1503 03.82 (P04C03)

13

**ANHANG ZUM EUROPÄISCHEN RECHERCHENBERICHT**
**ÜBER DIE EUROPÄISCHE PATENTANMELDUNG NR.**

EP 19 20 2448

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-04-2020

| Im Recherchenbericht angeführtes Patentdokument | Datum der Veröffentlichung | Mitglied(er) der Patentfamilie | Datum der Veröffentlichung |
|---|---|---|---|
| US 2008036115 A1 | 14-02-2008 | EP 1724300 A1 | 22-11-2006 |
| | | US 2008036115 A1 | 14-02-2008 |
| | | WO 2005087857 A1 | 22-09-2005 |
| US 6511217 B1 | 28-01-2003 | DE 60121896 T2 | 08-03-2007 |
| | | EP 1203650 A1 | 08-05-2002 |
| | | JP 4128768 B2 | 30-07-2008 |
| | | JP 2002226600 A | 14-08-2002 |
| | | JP 2008247034 A | 16-10-2008 |
| | | US 6511217 B1 | 28-01-2003 |
| | | US 2002123556 A1 | 05-09-2002 |
| | | US 2002126569 A1 | 12-09-2002 |
| US 5811511 A | 22-09-1998 | CN 1143375 A | 19-02-1997 |
| | | DE 19581517 C2 | 25-01-2001 |
| | | DE 19581517 T1 | 24-04-1997 |
| | | TW 357163 B | 01-05-1999 |
| | | US 5811511 A | 22-09-1998 |
| | | WO 9525761 A1 | 28-09-1995 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Klemens Kohlgrüber: Der gleichläufige Doppelschneckenextruder. Hanser Verlag München, 2007, 72-73, 191-212